# EUROPEAN PATENT APPLICATION

(11) **EP 1 650 252 A1**
(43) Date of publication of application: **26.04.2006**
(21) Application number: 04733144.2
(22) Date of filing: 14.05.2004
(51) Int. Cl.: C08J 3/12, C08L 51/04

(54) **RESIN POWDER OF RUBBER-CONTAINING GRAFT COPOLYMER MIXTURE AND PROCESS FOR PRODUCING THE SAME**

(30) Priority: 14.05.2003 JP 2003136086
(71) Applicant: MITSUBISHI RAYON CO., LTD., Tokyo 108-8506 (JP)
(72) Inventor: OMOTE, Masaki c/o Mitsubishi Rayon Co., Ltd., Otake-shi, Hiroshima 739-0693 (JP); MATSUMURA, Kouji c/o Mitsubishi Rayon Co., Ltd., Otake-shi, Hiroshima 739-0693 (JP); TORITANI, Akihiro c/o Mitsubishi Rayon Co., Ltd., Otake-shi, Hiroshima 739-0693 (JP)
(74) Representative: ter Meer, Nicolaus
(86) International application number: PCT/JP2004/006858
(87) International publication number: WO 2004/101658

(57) **Abstract**

A resin powder of a rubber-containing graft copolymer mixture is disclosed which is obtained by separately spray-drying a rubber-containing graft copolymer latex and a rigid non-elastic copolymer latex with a glass transition temperature of 60°C to 150°C, wherein the mass ratio of the rubber-containing graft copolymer to the rigid non-elastic copolymer is from 90/10 to 99.9/0.1.

## Description

### TECHNICAL FIELD

This application claims the priority of Japanese Patent Application No. 2003-136086 filed on May 14, 2003, the contents of which are incorporated herein by reference.

This invention relates to a resin powder of a rubber-containing graft copolymer mixture and a process for producing the same. More particularly, this invention relates to a resin powder of a rubber-containing graft copolymer mixture in which the powder characteristics of the rubber-containing graft copolymer are improved without deterioration of impact strength modification performance and a process for producing the same.

### BACKGROUND ART

Powder of a rubber-containing graft copolymer is used as an impact strength modifier for rigid plastics such as polyvinyl chloride. This type of powder of a rubber-containing graft copolymer is obtained by recovery as a dry powder of a rubber-containing graft copolymer from a rubber-containing graft copolymer latex obtained by emulsion polymerization, and used as an impact strength modifier by melt-kneading with rigid plastics.

As one of the methods for recovering a rubber-containing graft copolymer as powder, a spray-drying method is known for recovering dry particles of a rubber-containing graft copolymer by spraying a rubber-containing graft copolymer latex produced by emulsion polymerization into heated air.

In the spray-drying method, particles are liable to adhere and agglomerate when they contact with each other during the drying process. As a result, there is a problem of generation of much coarse powder production. And, blocking in which powder agglomerates during storing or deterioration of powder fluidity is liable to occur, therefore a problem of clogging of a transport line or the like is liable to occur. In particular, the tendency of blocking or clogging of a transport line becomes higher when the content of a rubbery polymer in a rubber-containing graft copolymer for improving impact strength modification performance is increased.

Furthermore, a problem of adhesion or deposition of powder of a rubber-containing graft copolymer at various sites in production facilities in each production process involving spray-drying occurs because the surface of the particle of a rubber-containing graft copolymer powder has adhesiveness.

Accordingly, trials for improving powder characteristics such as anti-blocking, fluidity and bulk specific gravity of a powder of a rubber-containing graft copolymer have been performed.

For example, there is a method of mixing a processing aid (a rigid non-elastic copolymer) with a rubber-containing graft copolymer, which includes a method of spray-drying of a latex blend formed by blending a rubber-containing graft copolymer and a processing aid after being separately obtained by emulsion polymerization, or a method of covering with a final shell after co-agglomeration of a rubber-containing graft copolymer and a processing aid and then spray-drying them (see e.g. JP-A-8-176385, and JP-A-5-247313).

There is also a method of adding calcium carbonate and silicon dioxide as inorganic fine powders after spray-drying (see e.g. JP-A-8-113692). Furthermore, there is a method of further adding a lubricant in addition to blending a rigid non-elastic copolymer (see e.g. JP-A-4-335052).

However, the methods described in JP-A-8-176385, and JP-A-5-247313 cannot effectively accomplish the surface improvement of the rubber-containing graft copolymer powder having stickiness because the rigid non-elastic copolymer is incorporated in the inside of the rubber-containing graft copolymer powder. As a result, the powder characteristic improvement of the rubber-containing graft copolymer and the effect on prevention of adhesion to the inside of a dryer are hardly expected.

In addition, as for the rubber-containing graft copolymer powder produced by the method described in JP-A-8-113692, the physical properties of a final molded article are affected because, in a resin to which this powder is added, calcium carbonate and silicon dioxide are dispersed in the resin without melting. Therefore, the maximum quantity of addition of calcium carbonate and silica and so on is restricted, and the addition of only such a quantity may result in insufficient improvement in the powder characteristics at the product level. Furthermore, adhesion to the inside of a spray-dryer cannot be prevented and the coarse powder generation during drying cannot be reduced because calcium carbonate and silicon dioxide are added after spray-drying of the rubber-containing graft copolymer.

In the method described in JP-A-4-335052, higher fatty acids and esters thereof, higher alcohols, fatty esters, silicone oils and the like are described as lubricants, however, the powder characteristics are not sufficiently improved for a resin powder of a rubber-containing graft copolymer mixture obtained by spray-drying of a rubber-containing graft copolymer while continuously feeding such a lubricant in a dryer.

### DISCLOSURE OF THE INVENTION

The present invention has been made to solve the above problems, and an object of the present invention is to provide a resin powder of a rubber-containing graft copolymer mixture in which the powder characteristics of the rubber-containing graft copolymer powder recovered by spray-drying are improved without affecting the physical properties of molded articles and adhesion of powder to the inside of a dryer or to the inside of pipe lines during powder drying can be prevented and a process for producing the same.

The inventors have investigated to solve the above problems, and as a result they have completed the present invention of a resin powder of a rubber-containing graft copolymer mixture and a process for producing the same.

One embodiment of the present invention provides a resin powder of a rubber-containing graft copolymer mixture which is obtained by separately spray-drying a rubber-containing graft copolymer latex and a rigid non-elastic copolymer latex with a glass transition temperature of 60°C to 150°C, wherein the mass ratio of the rubber-containing graft copolymer to the rigid non-elastic copolymer is from 90/10 to 99.9/0.1.

Another embodiment of the present invention provides a process for producing a resin powder of a rubber-containing graft copolymer mixture obtained through drying a rubber-containing graft copolymer latex with a heated gas for drying after spraying in a dryer, wherein a rubber-containing graft copolymer latex and a rigid non-elastic copolymer latex with a glass transition temperature of 60°C to 150°C are sprayed with separate spraying devices, in such a manner that the mass ratio of the rubber-containing graft copolymer to the rigid non-elastic copolymer is from 90/10 to 99.9/0.1.

### BEST MODE FOR CARRYING OUT THE INVENTION

Hereinafter, preferable examples of the present invention are explained with referring to a figure. However, the present invention is not limited to the following examples, and for example, each constituent element of these examples may be combined suitably.

A resin powder of a rubber-containing graft copolymer mixture of the present invention comprises a rubber-containing graft copolymer and a rigid non-elastic copolymer with a glass transition temperature of 60°C to 150°C.

The rubber-containing graft copolymer used in the present invention is a copolymer obtained by graft polymerization of polymerizable monomers onto a backbone polymer of a rubbery polymer with a glass transition temperature (hereinafter referred to as Tg) of 20°C or less. There is no particular limitation as long as the copolymer is this sort of thing, however, the content of the rubbery polymer in the rubber-containing graft copolymer is preferably 40% by mass or more, and more preferably 50% by mass or more.

Examples of the rubbery polymer include acrylic rubbery polymers containing an n-butyl acrylate unit, a 2-ethylhexyl acrylate unit, etc. as a main component, diene rubbery polymers containing a butadiene unit, an isoprene unit, a chloroprene unit, etc. as a main component, silicone rubbery polymers containing an organosiloxane unit, etc. as a main component and silicone acrylic compound rubbery polymers obtained by polymerizing acrylate monomers in the presence of silicone rubbery polymers, etc. More than two kinds of the rubber polymers can be used in combination. Furthermore, it can be a rubbery polymer containing a glassy polymer as a core.

The polymerization method of the rubber-containing graft copolymer is not particularly limited, and the polymerization of a rubbery polymer and graft polymerization can proceed using two or more of agitated apparatuses or using the same agitated apparatus successively.

The rigid non-elastic copolymer used in the present invention has Tg of 60 to 150°C. This can improve the powder characteristics of the rubber-containing graft copolymer. A rigid non-elastic copolymer with Tg of less than 60°C results in poor improvement in the powder characteristics and is not preferable. When Tg of the rigid non-elastic copolymer is more than 150°C, there is an increased possibility of fine powder being produced because the rigid non-elastic copolymer powder is crushed by shearing in the inside of a dryer or pipe lines and is not preferable.

Further, Tg of the rigid non-elastic copolymer in the present invention can be calculated with a formula such as Fox's equation, based on the Tg of homopolymers of monomers used for emulsion polymerization and charge ratio of monomers, or may be measured with different measuring devices.

It is preferable that the powder particle size after spray-drying of the rigid non-elastic copolymer used in the present invention is 45 µm or less. When the powder particle size after spray-drying is more than 45 µm, the coverage factor of the rigid non-elastic copolymer latex for the rubber-containing graft copolymer latex becomes low, and an effect on improvement in the powder characteristics will tend to be decreased.

The molecular mass of the rigid non-elastic copolymer used in the present invention is preferably from 500,000 to 5,000,000, more preferably from 800,000 to 3,000,000.

The rigid non-elastic copolymer used in the present invention is produced by emulsion polymerization as a rigid non-elastic copolymer latex containing a rigid non-elastic copolymer. The solid content in the rigid non-elastic copolymer latex is preferably 20% or less, more preferably 10% or less. This can prevent clogging in a spraying device when spraying the rigid non-elastic copolymer latex from the spraying device, and can facilitate the reduction of the particle size of the rigid non-elastic copolymer after drying.

The rigid non-elastic copolymer used in the present invention is, though there is no particular limitation, usually produced by emulsion polymerization. Addition of monomers, polymerization initiators and emulsifiers during polymerization can be performed by batch feeding, sequential feeding, divisional feeding, multistage feeding, etc.. Further, these may be employed in combination.

In the present invention, monomers commonly used in emulsion polymerization can be used as a component of graft polymerization onto the rubbery polymer and as a component of the rigid non-elastic copolymer. For example, aromatic vinyl monomers, vinyl cyanide monomers, ethylenically unsaturated carboxylic acid monomers, unsaturated carboxylic acid alkyl ester monomers, halogenated vinyl monomers, maleimide monomers, etc. are listed.

The aromatic vinyl monomers are not particularly limited, however, styrene, α-methyl styrene, methyl-α-methyl styrene, vinyl toluene, divinyl benzene, etc. are listed, for example. Among these, styrene is especially preferred. These aromatic vinyl monomers can be used alone or in combination of two or more kinds.

The vinyl cyanide monomers are not particularly limited, however, acrylonitrile, methacrylonitrile, α-chloro acrylonitrile, α-ethyl acrylonitrile, etc. are listed, for example. Among these, acrylonitrile is especially preferred. These vinyl cyanide monomers can be used alone or in combination of two or more kinds.

The ethylenically unsaturated carboxylic acid monomers are not particularly limited, however, a mono- or di-carboxylic acid such as acrylic acid, methacrylic acid, maleic acid, itaconic acid, etc. are listed, for example. These ethylenically unsaturated carboxylic acid monomers can be used alone or in combination of two or more kinds.

The unsaturated carboxylic acid alkyl ester monomers are not particularly limited, however, methyl acrylate, ethyl acrylate, butyl acrylate, propyl acrylate, 2-ethylhexyl acrylate, allyl acrylate, glycidyl acrylate, methyl methacrylate, ethyl methacrylate, butyl methacrylate, propyl methacrylate, 2-ethylhexyl methacrylate, allyl methacrylate and glycidyl methacrylate are listed, for example. These unsaturated carboxylic acid alkyl ester monomers can be used alone or in combination of two or more kinds.

The halogenated vinyl monomers are not particularly limited, however, vinyl chloride, vinylidene chloride, etc. are listed, for example. These halogenated vinyl monomers can be used alone or in combination of two or more kinds.

The maleimide monomers are not particularly limited, however, maleimide, N-phenyl maleimide, N-cyclohexyl maleimide, N-methyl maleimide, etc. are listed, for example. These maleimide monomers can be used alone or in combination of two or more kinds.

Further, emulsion polymerizable monomers such as ethylene, propylene, vinyl acetate, vinyl pyridine, etc. can be used other than the monomers listed above.

In the production of the rubber-containing graft copolymer of the present invention, a crosslinking agent such as divinylbenzene, 1,3-butylene dimethacrylate, allyl methacrylate or glycidyl methacrylate, or a chain transfer agent such as a mercaptane can be used in combination, if necessary during the polymerization of the rubbery polymer or during the subsequent graft polymerization.

The polymerization initiators used in the production of the rubber-containing graft copolymer and the rigid non-ealstic copolymer of the present invention are not particularly limited, however, redox initiators containing a water-soluble persulfate such as potassium persulfate, sodium persulfate or ammonium persulfate, or an organic peroxide such as di-isopropylbenzenehydroperoxide, p-menthane hydroperoxide, cumenehydroperoxide, t-butylhydroperoxide, methylcyclohexylhydroperoxide, 1,1,3,3-tetramethylbutylhydroperoxide, 1,1,3,3-tetramethylbutylperoxy-2-ethylhexanoate or t-butylperoxy-3,5,5-tri-methylhexanoate as one component can be used.

The emulsifiers are not particularly limited, however, alkali metal salts of higher fatty acids such as disproportionate rosin acids, oleic acid and stearic acid and alkali metal salts of sulfonic acids such as dodecylbenzenesulfonic acid can be used alone or in combination of two or more kinds.

Further, an appropriate antioxidant, an additive or the like can be added to the emulsion polymer latex before spray-drying.

The mass ratio of the rubber-containing graft copolymer to the rigid non-elastic copolymer in the resin powder of a rubber-containing graft copolymer mixture of the present invention is from 90/10 to 99.9/0.1. When the content of the rigid non-elastic copolymer is more than 10% by mass, deterioration of physical properties such as deterioration of impact resistance of molded articles or an increase in fine powder generation is caused, therefore it is not preferable. When the content of the rigid non-elastic copolymer is less than 0.1%, an effect on improvement in the powder characteristics is not sufficiently obtained, therefore it is not preferable. More preferably, the mass ratio of the rubber-containing graft copolymer to the rigid non-elastic copolymer is from 95/5 to 99.5/0.5.

The resin powder of a rubber-containing graft copolymer mixture of the present invention can preferably further contain an inorganic fine powder. The added amount of the inorganic fine powder is from 0.01 to 5.0 parts by mass based on 100 parts by mass of the spray-dried mixed powder of the rubber-containing graft copolymer and the rigid non-elastic copolymer. This can further improve the powder characteristics such as anti-blocking property of the resin powder of a rubber-containing graft copolymer mixture. When the added amount of the inorganic fine powder is less than 0.01 part by mass, the effect on improvement in the powder characteristics is liable to decrease. On the other hand, when the added amount is more than 5.0 parts by mass, the transparency of molded articles is liable to decrease.

The above-mentioned inorganic fine powders can be used alone or in combination of two or more kinds.

The inorganic fine powder used in the present invention is preferably a silicon dioxide fine powder and/or a calcium carbonate fine powder.

As a silicon dioxide fine powder, any types of silicon dioxide fine powders such as hydrophobic silicas, hydrophilic silicas and the like can be used.

Spray-drying in the present invention means a method of recovering a polymer as a dried powder by spraying, or atomizing, a latex containing a polymer into a dried gas, or hot air, and as for the shapes of dryers, spraying devices, etc., a publicly known spray-dryer or spraying device can be used. Further, the capacity of the spray-dryer is not particularly limited, and any capacity of dryer from a small-scale type used in laboratories to a large-scale type used industrially can be used.

The production process of the present invention is a process for obtaining a mixed resin powder by separately spray-drying a rubber-containing graft copolymer latex containing a rubber-containing graft copolymer, and a rigid non-elastic copolymer latex containing a rigid non-elastic copolymer, with separate spraying devices at the same time. At this time, it is preferable to feed the inorganic fine powder continuously into the dryer.

In the present invention, by obtaining a mixed resin powder by separately spray-drying a rubber-containing graft copolymer latex and a rigid non-elastic copolymer latex with different spraying devices at the same time, the rigid non-elastic copolymer powder, which is a hard component, is adhered to the surface of the rubber-containing graft copolymer powder having stickiness, and the surface improvement of the rubber-containing graft copolymer powder is made possible. As a result, the effective improvement in the powder characteristics and prevention of powder adhesion to a dryer can be achieved.

As for the spray device for spraying the rubber-containing graft copolymer latex, one or more are set at the upper side of a dryer, and any spray type, such as a rotary disk type, a pressure nozzle type, a binary fluid nozzle type and a pressure binary fluid nozzle type may be employed. As for the device for spraying the rigid non-elastic copolymer latex, one or more are set at the upper side or at a side wall of a dryer, and as for the spraying method, a nozzle type, such as a pressure nozzle type, a binary fluid nozzle type or a pressure binary fluid nozzle type are preferably used.

In the present invention, it is preferable to feed an inorganic fine powder continuously into a dryer in which each latex is sprayed. The adhesion of powder in each step in a corn portion at the lower side of a dryer, in pipe lines up to a separating device, in the inside of the separating device and the like can be effectively prevented by further adding the inorganic fine powder in the dryer. Furthermore, the powder characteristics can be improved, too. As a method for feeding an inorganic fine powder [in] into the dryer continuously, a powder may be fed into the dryer directly from the top ceiling or the side wall of the dryer with any of a variety of powder feeders, or fed by suction by making the inside of the dryer negative pressure. In addition, an inorganic fine powder can be fed into the dryer continuously after being mixed with a gas for drying, a gas for atomizing latex sprayed from a nozzle such as a binary fluid nozzle or a pressure binary fluid nozzle or a gas for cooling a disk atomizer.

In the present invention, it is preferable to have an apparatus for separating and recovering the resin powder of a rubber-containing graft copolymer mixture obtained by spray-drying from a gas for drying. The method of recovering the dry powder from the gas for drying is not particularly limited, however, a cyclone separator in a centrifugal system or a bag filter in a filtration system is used preferably.

According to the present invention as described above, the powder characteristics of the rubber-containing graft copolymer powder can be improved without affecting the physical properties of the molded article. Furthermore, a resin powder of a rubber-containing graft copolymer mixture of the present invention can prevent adhesion to the inside of the producing apparatus used in the process of powder production. Accordingly, contamination from the producing apparatus can be diminished, so that the quality can be improved. Additionally, the yield becomes higher, and the necessity of frequent washing of the apparatus is diminished, so that the productivity can be improved.

According to the present invention, increase in cost can be offset, clogging at transportation of the powder and powder blocking during storing or automatic weighing can be avoided, and a producing apparatus can be increased in size.

### EXAMPLES

The present invention is illustrated by the following examples. Incidentally, "parts" and "%" in the following examples and comparative examples refer to "parts by mass" and "% by mass", respectively, unless otherwise specified.

In the examples and comparative examples, average powder particle size, anti-blocking, bulk specific gravity and adhesion level of a powder in a dryer were evaluated. Evaluation methods are as shown below.
(1) Average powder particle size
   It was measured with a laser diffraction type particle size distribution measuring apparatus LA-910 (Horiba, Ltd.).
(2) Anti-blocking
   A cylindrical vessel was charged with 20 g of a rubber-containing graft copolymer powder, and subjected to a pressure of 17.5 KPa at 50°C for 6 hours. The block thus obtained was vibrated with a micro type electromagnetic oscillation sieve apparatus (Tsutsui Rika, Ltd.), and the time (sec) until 60% of the block was crushed was measured. The shorter the time, the better the anti-blocking property.
(3) Bulk specific gravity
   This was measured with a bulk specific gravity apparatus described in JIS-K-6721 (unit:g/cm³).
(4) Adhesion level of powder in a dryer
   The level of powder adhesion to the inside of a dryer after spray-drying was evaluated by visual observation and graded according to the following criteria.
   A: Extremely little adhesion
   B: Little adhesion
   C: Adhesion observed in places
   D: Adhesion observed all over
(5) Other physical properties
   A polyvinyl chloride resin and any of a resin powder of a rubber-containing graft copolymer mixtures in the examples described below were melt-kneaded, then molded by injection molding. Transparency of the obtained molded plates was evaluated by visual observation and graded at A or B. A indicates "good transparency", and B indicates "inferior transparency".

### (Preparation example 1) Preparation of rubbery polymer (A-1) latex

A a reactor having a pressure resistance of 3.0 MPa, equipped with a stirrer, was charged with 190 parts of deionized water, 1.5 parts of sodium dodecylbenzene sulfonate, 0.15 part of sodium salt of a formalin condensate of naphthalene sulfonic acid, 0.12 part of sodium pyrophosphoric acid anhydride, 0.5 part of diisopropylbenzene hydroperoxide (trade name: "PERCUMYL (trademark) P", manufactured by NOF Corp.), 76 parts of 1,3-butadiene, 24 parts of styrene and 1 part of divinylbenzene, then heated up to 70°C while stirring.

Then, the reactor was charged with a mixture of 10 parts of deionized water, 0.0009 part of disodium ethylenediaminetetraacetate, 0.0003 part of ferrous sulfate heptahydrate and 0.17 part of sodium formaldehyde sulfoxylate on the way of heat-up to start polymerization. After leaving for 5 hours, the reactor was charged with 0.1 part of diisopropylbenzene hydroperoxide. Butadiene type rubbery polymer (A-1) latex was taken out of the reactor after leaving for an additional 4 hours.

### (Preparation example 2) Preparation of rubber-containing graft copolymer (A-2) latex

A reactor equipped with a stirrer was charged with 699 parts of the rubbery polymer (A-1) (233 parts in terms of the solid content), 85 parts of water, 1.0 part of sodium dodecylbenzenesulfonate, and after displacement by nitrogen it was charged with 0.3 part of sodium formaldehyde sulfoxylate dihydrate, then the inner temperature was heated up to 70°C while stirring. In addition, the reactor was charged by sequential feeding for 30 minutes with a mixture of 28 parts of methyl methacrylate, 7 parts of ethyl acrylate and 0.15 part of t-butyl hydroperoxide (trade name: "PERBUTYL (trademark) H-69", manufactured by NOF Corp.) and left for 100 minutes. Then, the reactor was charged by sequential feeding for 100 minutes with a mixture of 55 parts of styrene and 0.20 part of t-butyl hydroperoxide and left for 120 minutes. Then, the reactor was charged by sequential feeding for 30 minutes with a mixture of 10 parts of methyl methacrylate and 0.05 part of t-butyl hydroperoxide and polymerization was finished after leaving for 120 minutes.

A rubber-containing graft copolymer (A-2) latex was obtained by charging 0.21 part of emulsified and dispersed triethyleneglicol-bis [3-(3-tert-butyl-5-methyl-4-hydroxyphenyl) propionate and 0.63 part of emulsified and dispersed dilauryl-3, 3'-thiodipropionate based on 100 parts of the graft copolymer in the thus obtained latex of a graft copolymer (rubber content of 70%).

### (Preparation example 3) Preparation of rigid non-elastic copolymer (B-1) latex

A reactor equipped with a stirrer was charged with 300 parts of deionized water, 1.2 parts of sodium lauryl sulfonate, 69 parts of methyl methacrylate, 24 parts of butyl methacrylate, 7 parts of butyl acrylate and 0.005 part of n-octyl mercaptan, then heated up to 50°C while stirring.

Then, the reactor was charged with a mixture of 30 parts of deionized water and 0.15 part of potassium persulfate to start polymerization. After leaving for 5 hours, a rigid non-elastic copolymer (B-1) latex was taken out of the reactor. The mass average molecular mass and Tg of the obtained polymer were 2,400,000 and 64°C, respectively.

### (Preparation example 4) Preparation of rubber-containing graft copolymer (C-1) latex

By mixing 2 parts of tetraethoxysilane, 0.5 part of γ-methacryloyloxypropyl dimethoxymethylsilane and 97.5 parts of octamethylcyclotetrasiloxane, 100 parts of a siloxane mixture was obtained. One-hundred parts of the thus obtained siloxane mixture was added to 200 parts of distilled water in which 1 part of sodium dodecylbenzenesulfonate and 1 part of dodecylbenzenesulfonic acid were dissolved, then organosiloxane latex was obtained by emulsification and dispersion with a homogenizer at a pressure of 30 MPa, after pre-mixing at 10,000 rpm with a homomixer. The above mixture was transferred to a separable flask equipped with a condenser and stirrer blade, and was kept at 20°C after heating at 80°C for 5 hours with stirring. After 48 hours, this latex was set to pH 7.4 using sodium hydroxide aqueous solution to finish the polymerization and polyorganosiloxane latex was obtained. Conversion of the polyorganosiloxane was 89.5% by mass and the average particle size of the polyorganosiloxane was 0.17 µm. Additionally, the gel content was measured as 90.6% by mass for a sample after extraction with toluene at 90°C for 12 hours of a solid sample which was obtained by coagulation and drying of the above latex with isopropanol.

A separable flask equipped with a stirrer was charged with 28.3 parts of the above polyorganosiloxane latex (10 parts in terms of the solid content) and 275 parts of distilled water, then heated up to 50°C after displacement by nitrogen. A mixture of 77.5 parts of n-butylacrylate, 1.6 parts of allylmethacrylate and 0.32 part of tert-butylhydroperoxide was charged and stirred for 30 minutes to infiltrate the above mixture into the polyorganosiloxane particles. The flask was then charged with a mixture of 0.001 part of ferrous sulfate, 0.003 part of disodium ethylenediaminetetraacetate, 0.30 part of rongalite and 5 parts of distilled water to start radical polymerization. After leaving at 70°C as an internal temperature for 1 hour, the polymerization was finished and a compound rubber latex was obtained. A portion of the resulting latex was collected to measure the average particle size. The average particle size of the compound rubber was 0.23 µm. To the above silicone acrylic compound rubbery polymer latex, a mixture of 0.06 part of tert-butylhydroperoxide and 11 parts of methyl methacrylate was charged dropwise at 65°C for 20 minutes. After leaving at 70°C for 1 hour, graft polymerization onto the compound rubber was finished and a rubber-containing graft copolymer (C-1) latex was obtained.

### [Example 1] Preparation of resin powder of a rubber-containing graft copolymer mixture (spray-drying)

The rubber-containing graft copolymer (A-2) latex was spray-dried with a pressure binary fluid nozzle at a processing speed of flow rate of 90 kg/hr (36 kg/hr in terms of the solid content) using a spray-dryer (Ohkawara Kakohki Co., Ltd.) having the diameter of the barrel portion of 3500 mm and the height of the barrel portion of 4800 mm under the condition that a quantity of gas for drying was 30 Nm³/min and the entrance temperature of the gas for drying was controlled so that the exit temperature of the gas was 70°C. At the same time, the rigid non-elastic copolymer (B-1) latex whose solid content was adjusted to 10% was spray-dried with a binary fluid nozzle at a processing speed of flow rate of 7.2 kg/hr. Both nozzles were set so as to be able to spray toward the lower side of the dryer from the top ceiling of the dryer. Additionally, a silica fine powder named "AEROSIL (trademark) #50", manufactured by Nippon Aerosil Co., Ltd. was charged continuously at a rate of 108 g/hr into the dryer from a side wall of the dryer, at the same time as spray-drying of the rubber-containing graft copolymer latex and the rigid non-elastic copolymer latex.

Incidentally, the dry powder was separated from the gas for drying with a cyclone separator and taken out. The results of evaluations of the recovered powders are shown in Table 1.

### [Example 2]

The procedure of Example 1 was followed except that the rigid non-elastic copolymer (B-1) latex was diluted to give a solid content of 5% and the spray quantity was set at 14.4 kg/hr.

### [Example 3]

The procedure of Example 1 was followed except that the spray quantity of the rigid non-elastic copolymer (B-1) latex was set at 14.4 kg/hr.

### [Comparative example 1]

The procedure of Example 1 was followed except that the rigid non-elastic copolymer (B-1) latex was not sprayed.

**Table 1**

| | | Ex.1 | Ex.2 | Ex.3 | Comp. Ex.1 |
|---|---|---|---|---|---|
| Rubber-containing graft copolymer (A-2) | Spray quantity of latex (kg/hr) | 90 | 90 | 90 | 90 |
| | Spray solid cont. (kg/hr) | 36 | 36 | 36 | 36 |
| Rigid non-elastic copolymer (B-1) | Spray quantity of latex (kg/hr) | 7.2 | 14.4 | 14.4 | 0 |
| | Latex solid cont. (%) | 10 | 5 | 10 | - |
| | Spray solid cont. (kg/hr) | 0.72 | 0.72 | 1.44 | 0 |
| | Particle size after drying (µm) | 18.4 | 11.1 | 15.1 | - |
| Mass ratio of rubber-containing graft copolymer to rigid non-elastic copolymer | | 98.0/2.0 | 98.0/2.0 | 96.2/3.8 | 100/0 |
| Inorganic fine powder | Quantity of AEROSIL#50 (g/hr) | 108 | 108 | 108 | 108 |
| Added amount of inorganic fine powder based on 100 parts by mass of mixed powder (parts) | | 0.3 | 0.3 | 0.3 | 0.3 |
| Adhesion condition of powder in a dryer | | B | A | B | C-D |
| Other physical properties | | B | B | B | B |
| Evaluation | Average particle size (µm) | 101 | 98 | 97 | 103 |
| results of powder mixture | Bulk specific gravity (g/cm³) | 0.532 | 0.521 | 0.52 | 0.505 |
| | Anti-blocking (sec) | 36 | 42 | 48 | 350 |

### [Examples 4-6]

The procedures of Examples 1-3 were followed except that the rubber-containing graft copolymer (C-1) latex was used, and the spray quantity of the rigid non-elastic copolymer (B-1) latex was controlled so that the mass ratio of the rubber-containing graft copolymer to the rigid non-elastic copolymer (B-1) was the same as those of Examples 1-3, respectively, and also the added amount of AEROSIL #50 was changed to 75g/hr. Results are shown in Table 2.

### [Comparative example 2]

The procedure of Comparative Example 1 was followed except that the rubber-containing graft copolymer (C-1) latex was used, and the added amount of AEROSIL #50 was changed to 75 g/hr. Results are shown in Table 2.

**Table 2**

| | | Ex.4 | Ex.5 | Ex.6 | Comp. Ex.2 |
|---|---|---|---|---|---|
| Rubber-containing graft copolymer (C-1) | Spray quantity of latex (kg/hr) | 90 | 90 | 90 | 90 |
| | Spray solid cont. (kg/hr) | 25.2 | 25.2 | 25.2 | 25.2 |
| Rigid non-elastic copolymer (B-1) | Spray quantity of latex (kg/hr) | 7.5 | 15 | 15 | 0 |
| | Latex solid cont. (%) | 10 | 5 | 10 | - |
| | Spray solid cont. (kg/hr) | 0.75 | 0.75 | 1.5 | 0 |
| | Particle size after drying (µm) | 13.4 | 12.4 | 13.2 | - |
| Mass ratio of rubber-containing graft copolymer to rigid non-elastic copolymer | | 98.0/2.0 | 98.0/2.0 | 96.2/3.8 | 100/0 |
| Inorganic fine powder | Quantity of AEROSIL#50 (g/hr) | 75 | 75 | 75 | 75 |
| Added amount of inorganic fine powder based on 100 parts by mass of mixed powder (parts) | | 0.3 | 0.3 | 0.3 | 0.3 |
| Adhesion condition of powder in a dryer | | B | A | B | C-D |
| Other physical properties | | B | B | B | B |
| Evaluation | Average particle size (µm) | 96 | 93 | 93 | 108 |
| results of powder mixture | Bulk specific gravity (g/cm³) | 0.534 | 0.522 | 0.523 | 0.499 |
| | Anti-blocking (sec) | 39 | 46 | 47 | 400 |

As is clear from Tables 1 and 2, adhesion of powder to a corn portion of the dryer was slightly observed in the examples performed by using the process for producing the rubber-containing graft copolymer of the present invention, however, it was a level of continuous operation with no problem.

Also, as a result of evaluation of anti-blocking of the obtained resin powder of rubber-containing graft copolymers mixtures, the time until 60% of the powder block was crushed was short such as from 36 to 47 seconds, so that it was found that the anti-blocking is superior and the powder characteristics are improved.

On the contrary, the resin powders of rubber-containing graft copolymers obtained by Comparative examples 1 and 2, both of which do not contain the rigid non-elastic copolymer, showed significant adhesion of the powders to the corn portion of the dryer compared with Examples, and it was difficult to proceed continuous operation. In addition, as a result of evaluation of anti-blocking, the time until 60% of the powder block was crushed was long such as from 350 to 400 seconds, so that it was found that the anti-blocking is inferior and the powder characteristics of the obtained powder are not sufficiently improved.

As described above, according to the present invention, a resin powder of a rubber-containing graft copolymer mixture in which the powder characteristics of the rubber-containing graft copolymer powder recovered by spray-drying is improved without affecting the physical properties of molded articles and adhesion of powder to the inside of a dryer or to the inside of pipe lines during powder drying can be prevented and a process for producing the resin powder of a rubber-containing graft copolymer mixture can be provided.

## Claims

1. A resin powder of a rubber-containing graft copolymer mixture which is obtained by separately spray-drying a rubber-containing graft copolymer latex and a rigid non-elastic copolymer latex with a glass transition temperature of 60°C to 150°C, wherein the mass ratio of the rubber-containing graft copolymer to the rigid non-elastic copolymer is from 90/10 to 99.9/0.1.

2. The resin powder of a rubber-containing graft copolymer mixture according to claim 1, **characterized by** further containing an inorganic fine powder in the ratio of 0.01 to 5.0 parts by mass based on 100 parts by mass of the mixed powder of the rubber-containing graft copolymer and the rigid non-elastic copolymer.

3. The resin powder of a rubber-containing graft copolymer mixture according to claim 1, **characterized in that** the powder particle size after spray-drying of the rigid non-elastic copolymer after spray-drying is 45 µm or less.

4. The resin powder of a rubber-containing graft copolymer mixture according to claim 2, **characterized in that** the inorganic fine powder is a silicon dioxide fine powder and/or a calcium carbonate fine powder.

5. A process for producing a resin powder of a rubber-containing graft copolymer mixture obtained through drying a rubber-containing graft copolymer latex with a heated gas for drying after spraying in a dryer, wherein a rubber-containing graft copolymer latex and a rigid non-elastic copolymer latex with a glass transition temperature of 60°C to 150°C are sprayed with separate spraying devices, in such a manner that the mass ratio of the rubber-containing graft copolymer to the rigid non-elastic copolymer is from 90/10 to 99.9/0.1.

6. The process for producing the resin powder of the rubber-containing graft copolymer mixture according to claim 5, **characterized in that** an inorganic fine powder is continuously fed into a dryer in such a manner that the amount of the inorganic fine powder is 0.01 to 5.0 parts by mass based on 100 parts by mass of the mixed powder of the rubber-containing graft copolymer and the rigid non-elastic copolymer.

7. The process for producing the resin powder of the rubber-containing graft copolymer mixture according to claim 5, **characterized in that** the rigid non-elastic copolymer latex is sprayed in such a manner that the powder particle size of the rigid non-elastic copolymer after drying is 45 µm or less.
